# EUROPEAN PATENT APPLICATION

(11) **EP 4 186 756 A1**
(43) Date of publication of application: **31.05.2023**
(21) Application number: 22196544.5
(22) Date of filing: 20.09.2022
(51) Int. Cl.: B60T 1/00, B60T 13/74, F16D 55/226, F16D 63/00, F16D 65/18

(54) **ELECTRO-MECHANICAL BRAKE ACTUATOR AND CORRESPONDING LOCKING ACTUATOR**

(30) Priority: 30.09.2021 EP 21200165
(71) Applicant: ZF CV Systems Global GmbH, 3006 Bern (CH)
(72) Inventor: HOLUBECKI, Daniel, 55-080 Katy Wroclawwskie (PL); KOWALSKI, Przemyslaw, 51-180 Wroclaw (PL); TOMALA, Bartlomiej, 45-267 Opole (PL)
(74) Representative: Ohlendorf, Henrike

(57) **Abstract**

The invention relates to an electro-mechanical brake actuator (6, 406, 506, 606, 706, 906) of a commercial vehicle, comprising: an electric motor (8, 408, 508, 608, 708, 908) comprising a motor shaft (12, 412, 512, 612, 712, 912), a push rod (436, 536, 636, 736, 836, 936) being movable along a push rod longitudinal axis (438, 538, 638, 738) between a retracted position (440, 540) and an actuated position, a gear (10, 410, 510, 610, 710, 910) coupled to the electric motor and the push rod, wherein said gear is configured to transform the torque of the motor into a stroke of the push rod.

According to the invention, a locking means (13, 113, 213, 313, 413, 513, 613, 713, 813, 913) configured for selectively locking the push rod (436) in said actuated position is proposed. The invention also relates to a corresponding locking actuator (14, 114, 214, 314).

## Description

The present invention relates to an electro-mechanical brake actuator, in particular for a disc brake of a commercial vehicle, the brake actuator comprising an electric motor comprising a motor shaft for providing a driving torque, a push rod being movable along a push rod longitudinal axis between a retracted position and an actuated position, and a gear coupled to the electric motor and the push rod, wherein the gear is configured to transform the torque of the motor into a stroke of the push rod.

Electro-mechanical brake actuators of the aforementioned kind are used in the commercial vehicle industry. Such actuators are based upon the working principle that a torque of an electric motor is transformed by means of a gear into a push rod stroke to actuate the vehicle brake. In that regard, the maximum stroke of the push rod defines an actuated position of the push rod. When the actuator operates in reaction to a driver's input to generate a brake force, this is called "service-brake" function.

For commercial vehicles, it is additionally desirable to provide a so-called parking brake functionality at which the brake is closed permanently to prevent a parked vehicle form unwanted movements.

When utilizing electro-mechanical brake actuators, it is known to generate a permanent torque by the motor to keep the push rod in the actuated position to close the vehicle brakes during parking. Applying such a permanent torque, however, may damage the motor. Furthermore, a permanent supply of electrical power is required, which is unwanted.

Consequently, it has been an object of the invention to provide an electro-mechanical brake actuator of the aforementioned type comprising an improved parking brake functionality, which does not require the provision of a permanent torque from the electric motor and - in turn - no permanent supply of electric energy.

The invention attains this object by providing an electro-mechanical brake actuator according to claim 1. In particular, the invention attains this object in an embodiment where the electro-mechanical brake actuator comprises a locking means configured for selectively locking the push rod in the actuated position.

The invention is based upon the finding that by providing a locking means configured for selectively locking the push rod in the actuated position, the actuator can provide a parking brake functionality without having to provide a permanent engine torque and requiring a permanent supply of energy to the electric motor. The term "locking" is to be understood in the context of the invention as meaning a frictional-fit, positive-fit or force-fit blocking or significantly impeding of the movement of the push rod. With the help of the locking means, a movement of the push rod out of the actuated position can e.g. be selectively blocked or released by means of a positive-fit or a force-fit. In case of blocking the movement by a force-fit, the movement is impeded until a force acting on the push rod exceeds the force applied by the force-fit. In this way, also the stress on the electric motor and the gear is reduced.

According to a preferred embodiment, the locking means comprises a locking actuator, wherein the locking actuator is configured for selectively locking the push rod in the actuated position, and comprises a locking device that is configured to be moved between a locking position and a released position, wherein in the locking position, the locking device blocks a movement of the push rod and in the release position, the locking device releases the push rod. The locking means further comprises a locking device actuator that is configured to actuate the locking device between the locking position and the released position.

Electrical energy is only required to move the locking device into the locking position and afterwards, without any further action, the actuator will maintain the actuated or parking brake position without the requirement to supply additional energy. In this way, also malfunctions in the vehicle electric system would not affect the parking brake functionality of the actuator.

In terms of the invention, it shall be understood, that the push rod generally applies a braking force in the actuated position. When locked by means of the locking device in the actuated position, the push rod provides a parking brake force. When released by the locking device, the push rod moves between its actuated position and its retracted position depending on actuation by the actuator. When advanced into its actuated position by means of the actuator, the push rod applies a service brake force, wherein in the retracted position neither a service brake force nor a parking brake force is applied to the vehicle brake.

In a preferred embodiment, the locking device actuator comprises a spring element, wherein the spring element is configured for forcing the locking device into the locking position. In this way, the locking device actuator is automatically moved into the locking position, when no electrical energy is provided to the locking device actuator. Electrical energy is only required, when the locking device actuator needs to be moved into the released position. This configuration further increases the operational safety of the locking actuator in case of an unwanted loss of electrical energy.

According to another alternative embodiment, the locking device actuator comprises a linear actuator that is configured to move the locking device against the force of the spring element into the released position. The linear actuator has been found to be both reliable and capable of providing the required actuating forces.

Preferably, the linear actuator comprises an electric motor and a gear box and/or a solenoid. In general, the combination of an electric motor and a gear box is capable of providing higher actuation forces, wherein a solenoid provides very low reaction times.

According to another preferred embodiment, the electro-mechanical brake actuator comprises a brake drum coupled to the electric motor, wherein the locking device comprises a brake shoe that is configured to be moved relative to the brake drum between the locking position, at which the brake shoe blocks a movement of the brake drum, and the released position, at which a movement of the brake drum is enabled. The use of the combination of a brake drum and a brake shoe has been found to be beneficial to provide a reliable parking brake functionality to the actuator.

According to another preferred embodiment, the brake shoe comprises an adjuster configured to adjust a clearance between the brake drum and the brake shoe. In this way, wear of the brake shoe can be compensated to some extent, to keep reaction times to a minimum.

Preferably, the brake shoe is arranged inside or outside of the brake drum. According to the yet another preferred embodiment, the brake drum is coupled to the motor shaft of the electric motor.

According to yet another preferred alternative embodiment, the locking device comprises a wedge lock that is configured to be moved between the locking position, in which the wedge lock blocks a movement of the motor, and a released position, at which a movement of the motor is enabled. Preferably, the wedge lock is slidably accommodated in a housing portion of the actuator. The wedge lock provides an alternative to the drum brake arrangement of the previous embodiments. The wedge lock may, for example, be implemented, when installation space is limited. Preferably, the motor shaft comprises a locking plate, wherein the wedge lock is configured to lock a movement of the locking plate. Preferably, the locking plate comprises one or more recesses, with which the wedge lock may engage to selectively block a movement of the locking plate and, in turn, the electric motor.

According to an alternative embodiment, the wedge lock is configured to lock a movement of the motor shaft. Preferably, the motor shaft comprises a recess or uprising to temporarily engage with the wedge lock.

According to another preferred embodiment, the gear of the locking means is configured as a self-locking gear. This means that an output shaft of the gear connected to the push rod cannot be moved by torque applied to this shaft. In other words, the gear itself behaves like a brake. Thus, no additional locking actuator is required in this embodiment. After having moved the push rod into an actuated position, the actuator will remain in this position even if no further electric energy is supplied to the electric motor anymore.

According to a preferred embodiment, the self-locking gear is a self-locking worm gear. Preferably, a worm is attached to a shaft of the electric motor.

According to another preferred embodiment, the self-locking gear is part of a first gear stage and the gear further comprises a second gear stage. With the help of this second gear stage, the gear ratio can be selected as required.

In yet another preferred embodiment, the locking means further comprises a locking device that is configured for linear movement in an axial direction between a locking position, in which the locking device locks the push rod in the actuated position and a released position, in which the locking device releases the push rod. The locking means further comprises a spring member, which is preferably a compression spring, the spring member being configured to apply a spring force on the locking device towards the push rod for moving the locking device into the locking position. The locking means further comprises at least one securing unit configured to reversible retain the locking device against the spring force in the released position spaced apart from the push rod. Thus, locking the push rod in the actuated position is provided by a force-fit, in particular means of spring force acting on the push rod via the locking device.

It shall be understood that the spring force provided by the spring member has to be sufficiently high to prevent any undesired linear movement of the push rod in its axial direction. During operation of the electro-mechanical brake actuator, the locking device is retained against the spring force in the released position at a distance to the push rod. Thus, the locking device and the spring acting on the locking device do not affect the service brake function. In other words, the locking device applies a parking brake force onto the push rod in the locking position thereby locking the push rod in its actuated position in which the parking brake force is applied. In the released position, the parking brake force is released and the push rod can freely move between its actuated position and its retracted position depending on the actuator.

It is preferred that the locking device is a spring holder and the spring member is at least partly received in the spring holder. On the one hand, the arrangement of the locking means is more compact and on the other hand, the movement of the spring member is securely guided. Further, it should be understood that retaining the spring holder against the spring force at a distance to the push in the released position preferably avoids any movement of the spring holder in the axial direction.

Preferably, the push rod is configured to advance the locking device into the released position by moving against the spring force into its retracted position. Said retracted position defines the retracted position of the push rod. The invention recognizes that during operation of the electro-mechanical brake actuator and in particular, its electric motor, the parking brake function is no longer required but instead a service brake function. The locking means according to the invention advantageously use the movement in order to bring the spring holder from the locking position into the released position in which movement of the push rod in the axial direction during service brake actuations is not affected by the locking device, in particular the spring holder. In order to disengage or release the push rod, the electric motor may move the push rod into its retracted position thereby moving the locking device. Thus, the push rod in combination with the electric motor functions as an actuator for moving the locking device into the released position.

It is preferred that the securing unit is pivotingly mounted and configured to engage a mating part, which is provided at the spring holder. The securing unit is configured to engage the mating part by means of a pivoting movement in case the push rod is in its retracted position. In particular, the securing unit engages the mating part in a positive-fit. A positive-fit provides a secure engagement of the spring holder by the securing unit. It should be understood that the engagement of the securing unit and the mating part by means of a positive-fit refers may be realized by a detachable and repeatable engagement.

Preferably, the securing unit comprises a first securing element and a second securing element, each configured to pivot radially outwards to a deflected position for enabling linear movement of the locking device in the axial direction, thereby temporary receiving the mating part in between. The first securing element and the second securing element are further configured to pivot radially inwards from the deflected position thereby engaging the mating part in case the mating part is received in between. A pivoting movement for engaging and releasing the mating part allows engagement in a positive-fit thereby securely blocking a linear movement in the axial direction. In particular, the axial direction extends orthogonal to the direction of rotation of the first securing element and second securing element.

It is preferred that the first securing element has a first abutment surface and is configured to pivot upon a force applied to the first abutment surface. The second securing element has preferably a second abutment surface and is configured to pivot upon a force applied to the second abutment surface. Thus, a linear actuator or any other moving part of the electro-mechanical brake actuator may be used to apply a force to the abutment surface for retaining and release of the mating part. Pushing the abutment surface preferably advances the first and second securing element to pivot radially inwards for engaging the mating part. Preferably, the movement of the push rod into the retracted position causes the mating part to apply a force on the first and second abutment surface. Thus, a self-locking securing unit is provided for retaining the spring holder in case the push rod is in its retracted position.

In yet another preferred embodiment, the locking means further comprises a retaining unit configured to engage the securing unit and to prevent pivoting of the first securing element and the second securing element into the deflected position. Thus, the retaining unit securely avoids release of the mating part. However, the retaining unit may be in engagement with the securing elements in the released position and in the locking position.

It is preferred that the retaining unit is a retaining plate pivotingly engaged with the securing unit and which has at least one guiding slot. The securing unit has at least one guiding pin guided in the guiding slot such that movement of the guiding pin causes pivoting movement of the retaining unit. Preferably, the pivoting movement of the first and second securing element causes the guiding pin to move in the guiding slot in a first direction thereby causing the retaining plate to pivot over its dead center. When pivoted over its dead center, any force applied to the securing element may not cause movement of the pins and thus pivoting of the retaining unit in a reverse second direction to allow movement of the first and second securing element. For bringing the first and second securing element again into the deflected position for disengaging the mating part, the retaining unit has to be actuated somehow to execute a rotation in the reverse second direction. In that regard, the retaining unit is preferably coupled to an actuator of the locking means which is configured to move or pivot the retaining unit in the reverse second direction. The actuator is preferably a separate actuator or may be coupled to the electric motor of the electro-mechanical brake actuator instead.

A retaining plate, e.g. a slotted link disc, securely prevents an undesired movement or pivoting of the first and second securing element. Such a retaining plate, e.g. a slotted link disc, is easy to manufacture and may be coupled to the securing element via at least one guiding pin mounted to the securing element. In yet another preferred embodiment, the retaining unit has a projection provided by the securing unit and an engagement part provided by the mating part which corresponds to the projection. Engagement of the securing element and the mating part in a positive-fit prevents a pivoting movement of the first and second securing element for releasing the mating part such that the mating part locks the push rod in the locking position.

Preferably, the projection is configured to engage the engagement part upon linear movement of the mating part in the axial direction towards the push rod, in case the mating part is received between the first securing element and the second securing element. It is further preferred that the projection is configured to disengage the engagement part upon linear movement of the mating part in the axial direction towards the abutment surfaces. In other words, retaining of the locking device is preferably enabled by three steps. In a first step, the mating part is linear moved along the axial direction in a first direction into a position between the first and second securing being in its deflected position. Followed by a pivoting movement of the securing elements for engaging the mating part by the first and second securing element in a second step. Said pivoting movement being advanced pushing the abutment surfaces by the mating part. In a third step, the mating part is linear moved along the axial direction in a second direction opposite the first direction for engagement of the projection and the engagement part. Release of the locking element is realized by a linear movement of the mating part received between the first and second securing in the first direction along the axial direction to disengage the projection and the engagement part followed by a linear movement of the mating part in the second opposite direction, preferably towards the push rod.

In that regard, the securing unit preferably further comprises at least one actuation spring advancing the securing unit towards the deflected position for releasing the mating part. Thus, the securing elements automatically return into a position in which the securing elements may receive the mating part. After release of the mating part, the spring member advances the mating part towards the push rod for locking the push rod in the actuated position. As described above, it is preferred that the securing element, in case the push rod moves into its retracted position, pushes against at least one abutment surface provided at the securing element, thereby causing a movement, in particular a pivoting movement of the securing element for engaging the mating part. Thus, the locking and unlocking mechanism of the locking means are fully automatic.

In yet another preferred embodiment, the locking means is configured for selectively locking the push rod in the actuated position by engaging the push rod in a positive-fit. By directly engaging the push rod by means of a positive-fit, a more compact locking means is provided. A positive-fit in that regard provides a sufficient locking mechanism. It should be understood, that the locking means is configured to directly engage the push rod in the actuated position and not just indirectly be means of additional parts associated to the push rod.

Preferably, the locking means comprises a rotatable mounted locking device and the push rod comprises a least one recess corresponding to the locking device. The locking device is configured to engage the recess in a locking position in a positive-fit and to release the push rod upon rotational movement into a released position. Such a rotatable mounted locking device engages the recess provided at the push rod dependent on its angular position. Consequently, such a locking device can be easily driven by any kind of gear shaft coupled to the locking device. In particular, the locking device is rotatable mounted around a rotation axis that is orthogonal to the axial direction of the push rod. The locking device extends in the direction of the rotation axis and has a cross-sectional area extending orthogonal to the rotation axis.

The cross section is preferably partly circular with a region having a constant radius and a region having a smaller radius. In an angular position, in which the region with smaller radius is facing the push rod, the push rod is released and a service brake function is provided. In an angular position, in which the circular region with constant radius is facing the push rod, the locking device engages the corresponding recess of the push rod thereby locking the push rod in the actuated position for providing a parking brake function. Thus, locking and unlocking the push rod can be executed fully automatically by means of an actuator that is controlled during operation of the electro-mechanical brake actuator.

Preferably, the locking means has an actuator coupled to the locking device for advancing rotation of the locking device, wherein the actuator is preferably provided by the electric motor. Thus, the actuation of the locking device may be actuated and fully controlled by the electric motor.

The invention has hereinabove been described in a first aspect relating to an electro-mechanical brake actuator. In a second aspect, the invention further relates to a locking actuator for an electro-mechanical brake actuator of a commercial vehicle, in particular for a brake actuator of any one of the preceding claims, wherein the locking actuator is configured for selectively locking a push rod of the electro-mechanical brake actuator in an actuated position.

In the second aspect, the invention attains the object described above in that the locking actuator comprises a locking device that is configured to be moved between a locking position, in which the locking device blocks a movement of the push rod and a released position, in which the locking device releases the push rod, and a locking device actuator configured for actuating the locking device between the locking position and the released position.

The locking actuator of the second aspect takes advantage of the same benefits and encompasses the same preferred embodiments as the electro-mechanical brake actuator according the first aspect of the invention and vice versa. In order to avoid unnecessary repetitions, reference is therefore made to the above explanations.

For a more complete understanding of the invention, the invention will now be described in detail with reference to the accompanying drawing. The detailed description will illustrate and describe what is considered as a preferred embodiment of the invention. It shall be understood that various modifications and changes in form or detail could readily be made without departing from the spirit of the invention. It is therefore intended that the invention may not be limited to the exact form and detail shown and described herein, nor to anything less than the whole of the invention disclosed herein and as claimed hereinafter. Further, the features described in the description, the drawings and the claims disclosing the invention may be essential for the invention considered alone or in combination. In particular, any reference signs in the claims shall not be construed as limiting the scope of the invention. The wording "comprising" does not exclude other elements or steps. The wording "a" or "an" does not exclude a plurality.

This invention will now be described with reference to the accompanying drawings which illustrate, by way of example and not by way of limitation, one of several possible embodiments of the actuator proposed herein, and wherein:
- Fig. 1:: shows a preferred embodiment of a vehicle brake assembly comprising an electro-mechanical brake actuator according to the concept of the invention in a perspective view;
- Figs. 2a to 2c:: show preferred embodiments of locking actuators according to the concept of the invention in schematic views;
- Fig. 3:: shows an alternative embodiment of a locking actuator according to the concept of the invention in a schematic view;
- Fig. 4:: shows an alternative embodiment of a locking actuator according to the concept of the invention in a schematic view;
- Fig. 5a:: shows an alternative embodiment of a locking actuator according to the concept of the invention in a schematic view;
- Fig. 5b:: shows an alternative embodiment of a locking actuator according to the concept of the invention in a schematic view;
- Fig. 6:: shows an alternative embodiment of an electro-mechanical brake actuator according to the concept of the invention in a schematic view;
- Fig. 7:: shows an alternative embodiment of an electro-mechanical brake actuator according to the concept of the invention in a schematic view;
- Figs. 8a-8d: show detailed views of a locking means for the electro-mechanical brake actuator according to Fig. 7;
- Fig. 9:: shows an alternative embodiment of a locking means according to the concept of the invention in a schematic view;
- Fig. 10:: shows an alternative embodiment of an electro-mechanical brake actuator according to the concept of the invention in a schematic view;
- Figs. 11a-11b:: show detailed views of a locking device for the electro-mechanical brake actuator according to Fig. 10.

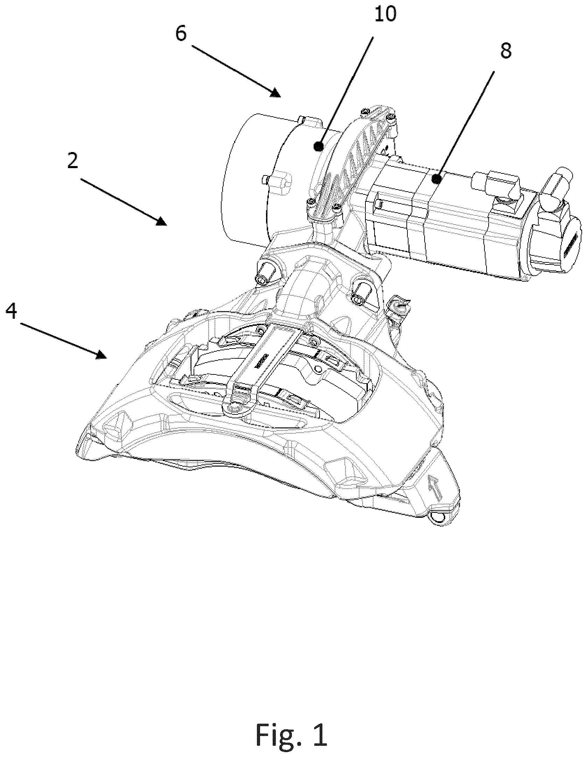

Fig. 1 shows a vehicle brake assembly 2. The vehicle brake assembly 2 comprises a vehicle disc brake 4 and an electro-mechanical brake actuator 6. The electro-mechanical brake actuator 6 is coupled to the disc brake 4 and provides a working force to the disc brake 4.

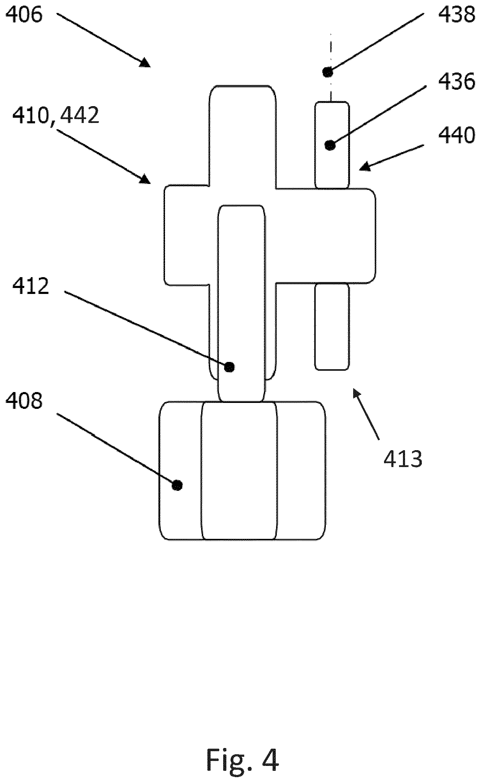

The brake actuator 6 comprises an electric motor 8. The electric motor 8 provides a driving torque. The brake actuator 6 furthermore comprises a gear 10. The gear 10 is coupled to the electric motor 8. The gear 10 is furthermore coupled to a push rod 436 (see Fig. 4), wherein the gear 10 is configured to transform the torque of the motor 8 into the stroke of the push rod 436 (see Fig. 4).

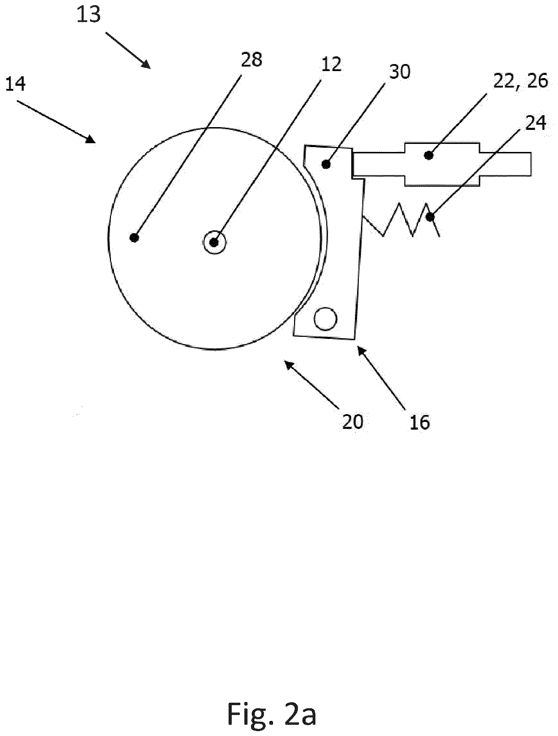

Fig. 2a shows a locking actuator 14. The locking actuator 14 is configured for selectively locking the push rod 436 (not shown) in an actuated position. The locking actuator 14 comprises a locking device 16. The locking device 16 is configured to be moved between a released position 20, as shown in Fig. 2a, and a locking position, which is not shown in Fig. 2a.

The locking device 16 furthermore comprises a locking device actuator 22. The locking device actuator 22 is configured for actuating the locking device 16 between the locking position and the released position 20. The locking device actuator 22 comprises a spring element 24. The spring element 24 is configured for forcing the locking device 16 into the locking position. The locking device actuator 22 comprises a linear actuator 26 that is configured to move the locking device 16 against the force of the spring element 24 into the released position 20.

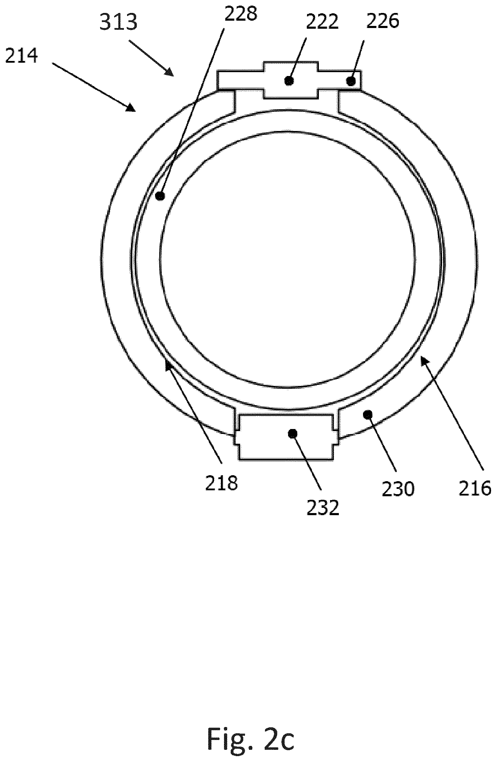

A motor shaft 12 is attached to the electric motor 8 (not shown in Fig. 2a, see Fig. 1). The motor shaft 12 is coupled to a brake drum 28. The locking device 16 comprises a brake shoe 30. The brake shoe 30 is configured to be moved relative to the brake drum 28 between a locking position 218 (see Fig. 2c), at which the brake shoe 30 blocks a movement of the brake drum 28, and the released position 20, at which a movement of the brake drum 28 is enabled.

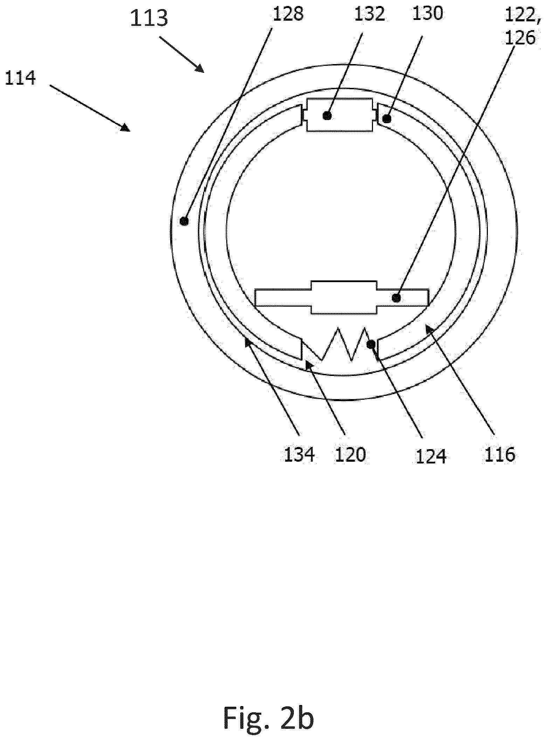

Fig. 2b shows an alternative embodiment of a locking actuator 114. The locking actuator 114 comprises a locking device 116 and a locking device actuator 122. The locking device actuator 122 comprises a spring element 124. The spring element 124 is configured for forcing the locking device 116 into a locking position (not shown in Fig. 2b). The locking device actuator 122 comprises a linear actuator 126. The linear actuator 126 is configured to move the locking device 116 against the force of the spring element 124 into a released position 120. The brake actuator 6 (see Fig.1) comprises a brake drum 128. The locking device 126 comprises a brake shoe 130 that is configured to be moved relative to the brake drum 128 to either lock or unlock the brake drum 128. The brake shoe 130 comprises an adjuster 132. The adjuster 132 is configured to adjust a clearance 134 between the brake drum 128 and the brake shoe 230. In Fig. 2b, the brake shoe 130 is arranged inside the brake drum 128.

Fig. 2c shows and alternative embodiment of a locking actuator 214. The locking actuator 214 is shown in a locking position 218. The locking actuator 214 comprises a locking device 216 that is coupled to a locking device actuator 222. The locking device actuator 222 is a linear actuator 226. The locking device 216 comprises a brake shoe 230 acting upon a brake drum 228. The brake shoe 230 comprises an adjuster 232 configured to adjust a clearance (see Fig. 2b) between the brake drum 228 and the brake shoe 230. In the embodiment of Fig. 2c, the brake shoe 230 is arranged outside of the brake drum 228.

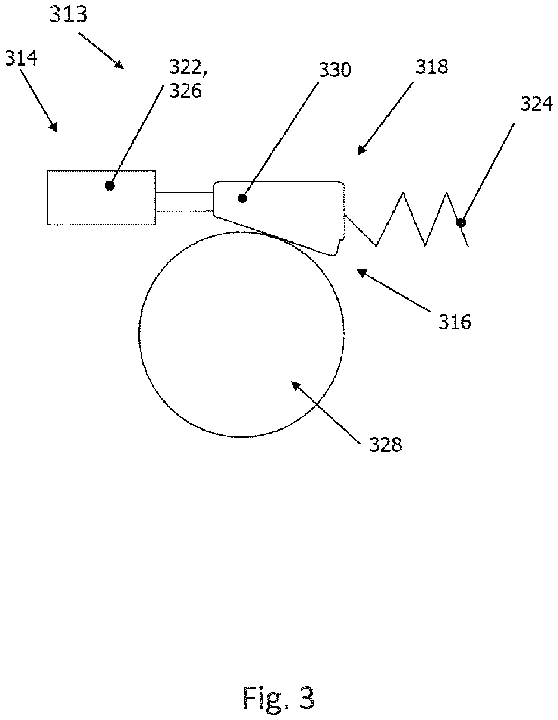

Fig. 3 shows an alternative embodiment of a locking actuator 314. The locking actuator 314 comprises a locking device 316. The locking device 316 is shown in a locking position 318. The locking device 316 is actuated by a locking device actuator 322. The locking device 316 comprises a wedge lock 330 that is configured to be moved between the locking position 318, in which the wedge lock 330 blocks a movement of a locking drum 328, and a released position (not shown), at which a movement of the locking drum 328 is enabled. The locking device actuator 322 is a linear actuator 326.

Fig. 4 shows an alternative embodiment of an electro-mechanical brake actuator 406. The electro-mechanical brake actuator 406 comprises an electric motor 408 to provide a driving torque, comprising a motor shaft 412. The electro-mechanical brake actuator 406 furthermore comprises a push rod 436. The push rod 436 is moveable along a push rod longitudinal axis 438 between a retracted position 440 and an actuated position (not shown).

The electro-mechanical brake actuator 406 moreover comprises a gear 410. The gear 410 is coupled to the electric motor 408 and the push rod 436. The gear 410 is configured to transform the torque of the motor 408 into a stroke of the push rod 436 along its longitudinal axis 438. The locking means 413 comprise the gear 410, which is configured as a self-locking gear 442. The self-locking gear 442 is a self-locking worm gear 442.

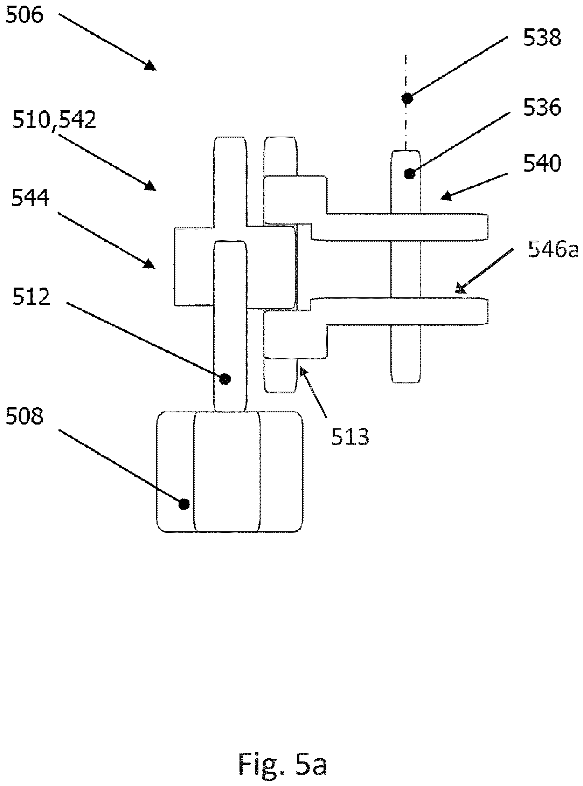

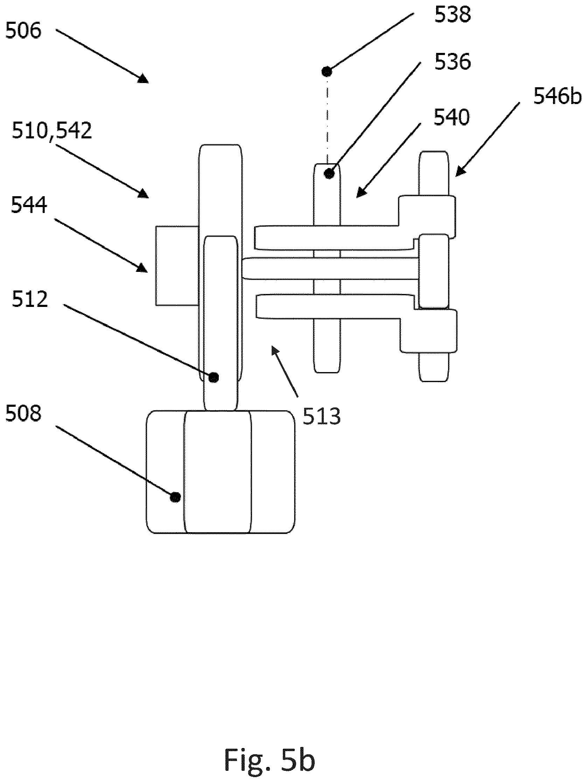

Figs. 5a and 5b show alternative embodiments of an electro-mechanical brake actuator 506. The electro-mechanical brake actuator 506 comprises an electric motor 508 comprising a motor shaft 512, a push rod 536 and a gear 510. The push rod 536 is moveable along a push rod longitudinal axis 538 between a retracted position 540 and an actuated position (not shown).

The gear 510 is coupled to the electric motor 508 and the push rod 536. The gear 510 is configured to transform the torque of the motor 508 into a stroke of the push rod 536 along its longitudinal axis 538. The locking means 513 comprise the gear 510 which is configured as a self-locking worm gear 542. The self-locking gear 542 is part of a first gear stage 544. The gear 542 further comprises a second gear stage 546 a,b. The second gear stage 546 a,b is shown in different configurations in Fig. 5a and 5b.

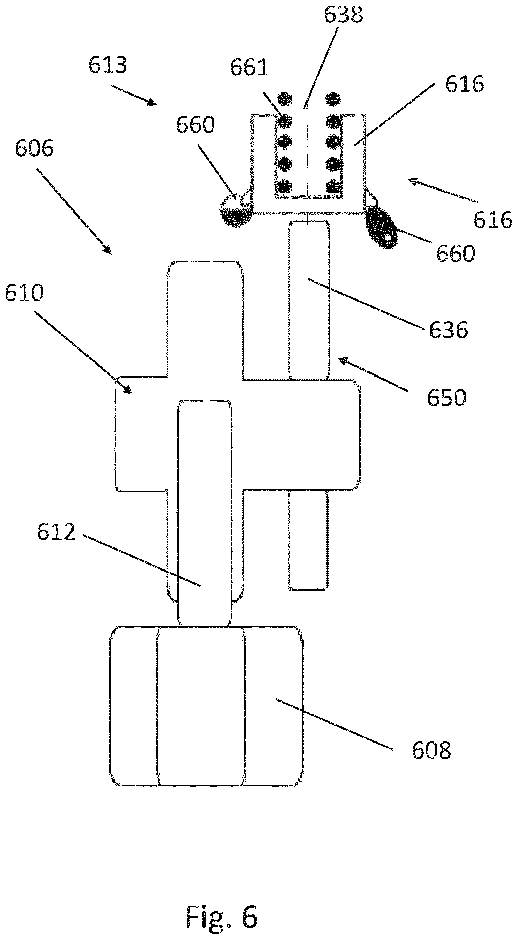

Fig. 6 shows an alternative embodiment of an electro-mechanical brake actuator 606. The electro-mechanical brake actuator 606 comprises an electric motor 608 to provide a driving torque, comprising a motor shaft 612. The electro-mechanical brake actuator 606 furthermore comprises a push rod 636. The push rod 636 is movable along a push rod longitudinal axis 638 between a retracted position (not shown) and an actuated position (not shown). In Fig. 6, the push rod 636 is shown between the retracted position and the actuated position.

The electro-mechanical brake actuator 606 moreover comprises a gear 610 coupled to the electric motor 608 and the push rod 636. The gear 610 is configured to transform the torque of the motor 608 into a stroke of the push rod 636 along its longitudinal axis 638.

The electro-mechanical brake actuator 606 further comprises a locking means 613 configured for selectively locking the push rod 636 in the actuated position (not shown).

The locking means 613 is schematically shown and comprises a locking device 616 provided by a spring holder. The spring holder 616 is configured for moving between a locking position in which the spring holder 616 locks the push rod 636 in the actuated position and a released position in which the spring holder 616 is at a distance to the push rod 636. The locking means 613 further comprise a spring member 661 received in the spring holder 616. The spring member 661 is configured to apply a spring force on the spring holder 616 towards the locking position and thus towards the push rod 636. In the shown embodiment, the spring member 661 is provided by a compression spring.

Moreover, the locking means 613 comprise a securing unit 660 configured to selectively lock the spring holder 616 against the spring force at a distance to the push rod 636 in the released position. In case the spring holder 616 is retained in the released position, the push rod 636 can freely move along its longitudinal axis 638.

During operation of the electro-mechanical brake actuator 606, the spring holder 616 is retained in the released position against the spring force applied by the spring member 661 by means of a securing unit 660. In order to provide a park brake function, the securing unit 660 stops retaining and releases the spring holder 616 such that the spring holder is advanced by the spring force applied by the spring member 661 towards the push rod 636. Thereby the push rod 636 is locked in the actuated position (not shown) of the push rod 636 by a force-fit.

It should be understood that the securing unit 660 may be provided by any means that are suitable to retain the spring holder 616 in a position in which the spring 661 is compressed and the spring holder 616 is arranged at a distance to the push rod 636 in the axial direction 638.

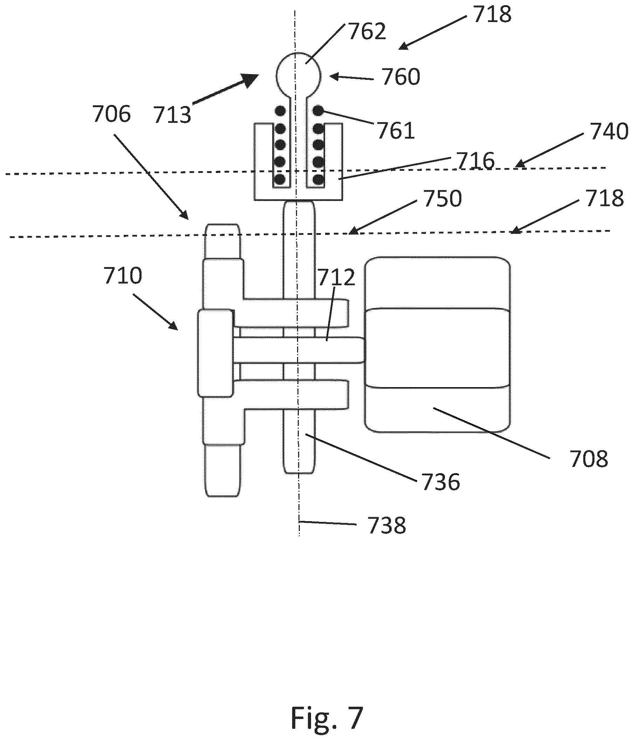

Fig. 7 shows an alternative embodiment of the electro-mechanical brake actuator 706.

The electro-mechanical brake actuator 706 comprises an electric motor 708 to provide a driving torque, comprising a motor shaft 712. The electro-mechanical brake actuator 706 furthermore comprises a push rod 736. The push rod 736 is movable along a push rod longitudinal axis 738 between a retracted position 740 and an actuated position 750.. In Fig. 7, the push rod 736 is shown in an intermediate state between the actuated position 750 and the retracted position 740 that are both indicated by dotted lines.

The electro-mechanical brake actuator 706 moreover comprises a gear 710 coupled to the electric motor 708 and the push rod 736. The gear 710 is configured to transform the torque of the motor 708 into a stroke of the push rod 736 along its longitudinal axis 738.

The electro-mechanical brake actuator 706 further comprises a locking means 713 configured for selectively locking the push rod 736 in the actuated position 750.

The locking means 713 is schematically shown and comprises a locking device 716 provided by a spring holder. In Fig. 7, the spring holder 16 is shown while moving into its locking position 718 thereby advancing the push rod 736 towards its actuated position 750. It shall be understood, that the position of the lower end of the spring holder 716 in the locking position 718 rests in the same position along the longitudinal axis 738 as the upper end of the push rod 736 in its actuated position 750. Therefore, the locking position 718 is indicated by the same dotted line as the actuated position 750.

The embodiment shown in Fig. 7 differs from the embodiment shown in Fig. 6 by the configuration of the spring holder 716 and the securing unit 760 configured to retain the spring holder 716.

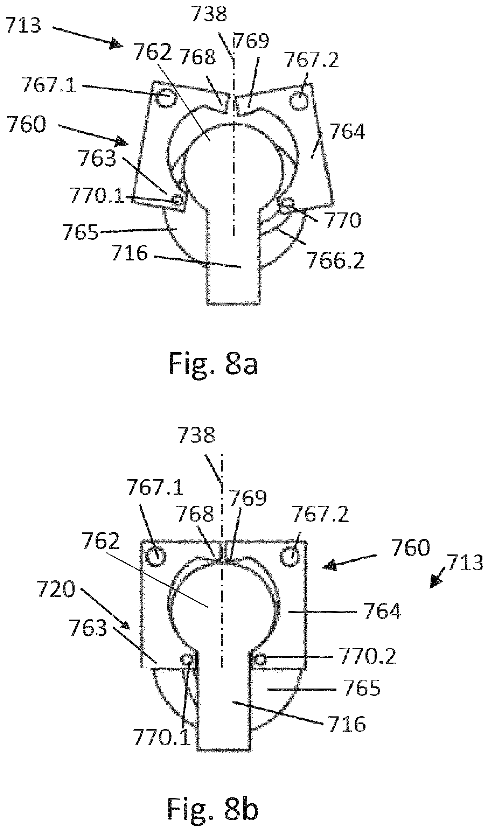

Figs. 8a to 8d refer to the embodiment shown in Fig. 7 and show the locking device 716 in more detail.

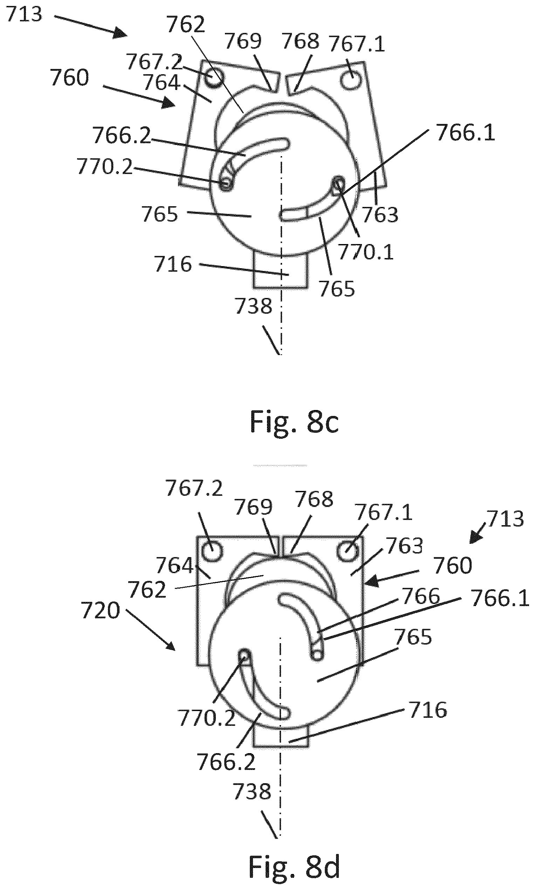

The spring holder 716 is configured for moving between a locking position 718 in which the spring holder 716 locks the push rod 736 in the actuated position 750 and a released position 720 (cf. Fig. 8b and 8d) in which the spring holder is at a distance to the push rod 736. The locking means 713 further comprise a spring member 761 received in the spring holder which is configured to apply a spring force on the spring holder 716 towards the locking position.

Moreover, the locking means 713 comprises a locking device 716 (see Figs. 8a-8d) for selectively retaining the spring holder 716 against the spring force at a distance to the push rod 736 in the released position 720. The spring holder 716 has a mating part 762 extending in the axial direction 738.

As in particular shown in Figs. 8a-8d, the locking device 716 comprises a pivotingly mounted securing unit 760 which is configured to engage the mating part 762 in the released position in a positive-fit. The securing unit 760 has an outer surface that is formed in accordance with the shape of the mating part 762.

Figs. 8b and 8d show the locking device 716 in the released position 720, wherein Figs. 8a and 8c show the locking device 716 in a state between the released position 720 and the locking position 718 (cf. Fig. 7).

As in particular shown in Figs. 8a and 8c, the securing unit 760 comprises a first securing element 763 pivotingly mounted by means of a first bearing 767.1 and a second securing element 764 pivotingly mounted by means of a second bearing 767.2. The first securing element 763 and the second securing element 764 are formed similar but mirror-inverted. The first securing element 763 and the second securing element 764 define a cut-out corresponding to the form of the mating part 762 such that heavy vibrations of the locking device 716 in the released position are prevented.

The first securing element 763 is connected to the first bearing 767.1 at its upper outer corner and has a first abutment surface 768 at its upper corner adjacent the second securing element 764. The second securing element 764 is formed similar to the first securing element 763, but mirror-inverted. The second securing element 764 has a second abutment surface 769 The first securing element 763 and the second securing element 764 each have a guiding pin 770.1, 770.2 provided at a lower inner corner that is configured to engage a retaining unit 765 of the locking means 713. The retaining unit 765 is formed as a retaining plate having a first guiding slot 766.1 for guiding the first guiding pin 770.1 and a second guiding slot 766.2 for guiding the second guiding pin 770.2.

By moving the push rod 736 (see Fig. 7) into its retracted position, the push rod 736 pushes the spring holder 716 and the mating part 762 provided at the spring holder towards the abutment surfaces 768, 769. By pushing the abutment surfaces 768, 769, the first securing element 763 and the second securing element 764 pivot radially inwards into a position in which the mating part 762 is locked within the cut-out provided between the first securing element 764 and the second securing element 764. The linear movement of the spring holder 716 and the first and second securing element 763, 764 accordingly, cause the first pin 770.1 and the second pin 770.2 to move within the corresponding one of the guidance slot 766.1, 766.2. Thereby, the retaining unit 765 will pivot around a pivot axis, which is orthogonal to the axial direction 738 of the push rod 736 over its dead center thereby preventing return movement of the securing unit 760. Consequently, a return movement of the securing unit 760 and release of the mating part 762 are prevented.

In order to bring the retaining unit 765 again into a deflected position in which the securing unit 760 releases the mating part 762, any suitable actuator may be coupled to the retaining unit 765 for pivoting the retaining unit 765 in a reverse direction for releasing the mating part 762 from the securing unit 760.

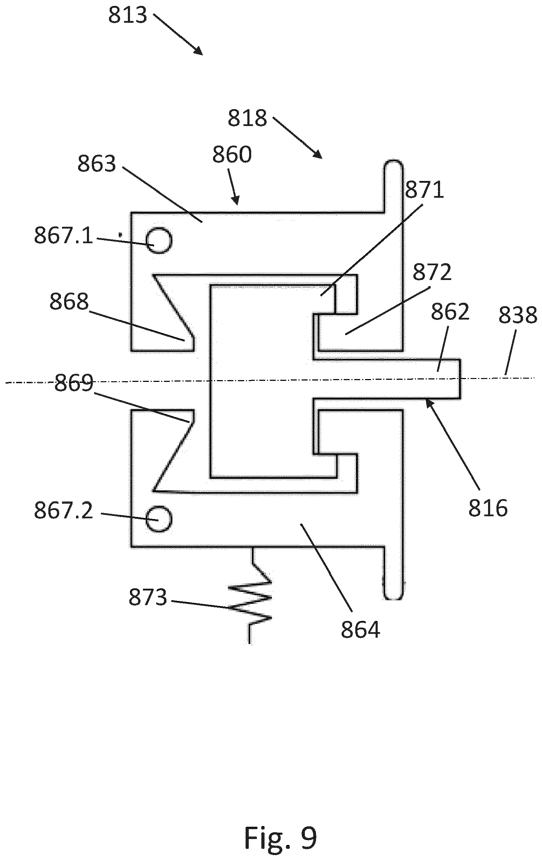

Fig. 9 shows an alternative embodiment of the locking means 813 for an electro-mechanical brake actuator. The locking means 813 comprise a locking device 816.

The locking means 813 is schematically shown and comprises a locking device 816 provided by a spring holder. In Fig. 9 only a section of the spring holder 816 is shown. The spring holder 816 is configured for moving between a locking position in which the spring holder 816 locks the push rod (not shown) in the actuated position thereby applying a parking brake force and a released position 818 in which the spring holder 816 is at a distance to the push rod (not shown). The locking means 813 further comprise a spring member (not shown) received in the spring holder 816. The spring member (not shown) is configured to apply a spring force on the spring holder 816 towards the locking position and thus towards the push rod (not shown).

Moreover, the locking means 813 comprise a securing unit 860 configured to selectively lock the spring holder 816 against the spring force at a distance to the push rod (not shown) in the released position. In case the spring holder 816 is retained in the released position 818, the push rod (not shown) can freely move along its longitudinal axis 838.

During operation of the electro-mechanical brake actuator (not shown), the spring holder 816 is retained in the released position 818 against the spring force applied by the spring member (not shown) by means of a securing unit 860. In order to provide a park brake function, the securing unit 860 stops retaining and releases the spring holder 816 such that the spring holder 816 is advanced by the spring force applied by the spring member (not shown) towards the push rod (not shown). Thereby the push rod (not shown) is locked in the actuated position (not shown) by a force-fit.

The embodiment shown in Fig. 9 differs from the embodiment shown in Figs. 7 and 8a-8d in that the retaining unit 865 has a projection 872 provided by the securing unit 860 and an engagement portion 871 corresponding to the projection 872 provided by the mating part 862.

In the released position 818 as shown in Fig. 9, the projection 872 engages the engagement portion 871 in a positive-fit. Thereby, a pivoting movement of the securing unit 860 radially outwards into a deflected position (not shown) for releasing the mating part 862 and thus locking the push rod (not shown) is prevented. In the released position 818, any pivoting movement of the securing unit 860 and in particular the pivoting movements the first securing element 863 and the second securing element 864 around the respective one of the bearings 867.1, 867.2 are avoided. In order to disengage the mating part 862 and the securing unit 860, the mating part 862 is moved linear in the axial direction 838 towards abutment surfaces 868, 869 of the first and second securing element 863, 864. By abutting the abutment surfaces 868, 869 by the mating part 862, a pivoting movement of the first and second securing element 863, 864 is supported. Further support for the pivoting movement is provided by an actuation spring 873 of the locking means 813. Thus, a self-locking and self-unlocking locking means 813 is provided.

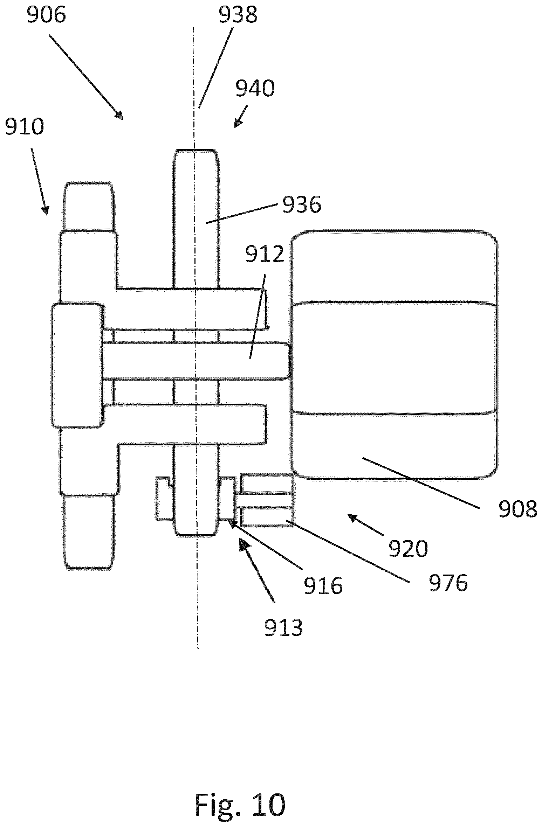

Fig. 10 shows another alternative embodiment of an electro-mechanical brake actuator 906 according to the invention.

The electro-mechanical brake actuator 906 comprises an electric motor 908 to provide a driving torque, comprising a motor shaft 912. The electro-mechanical brake actuator 906 furthermore comprises a push rod 936. The push rod 936 is movable along a push rod longitudinal axis 938 between a retracted position (not shown) and an actuated position 940.

The electro-mechanical brake actuator 906 moreover comprises a gear 910 coupled to the electric motor 908 and the push rod 936. The gear 910 is configured to transform the torque of the motor 908 into a stroke of the push rod 936 along its longitudinal axis 938.

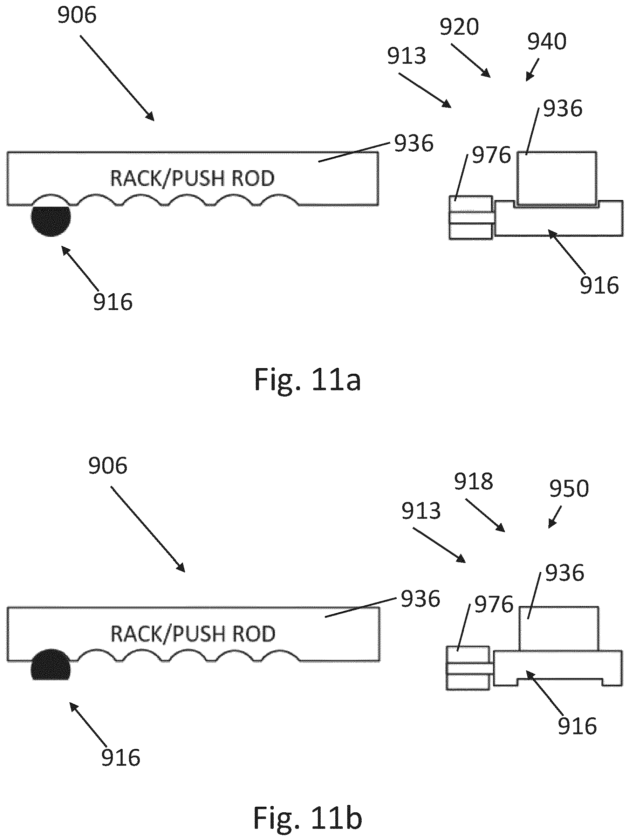

The electro-mechanical brake actuator 906 further comprises a locking means 913 configured for selectively locking the push rod 936 in the actuated position (not shown). Figs. 11a and 11b show a detailed view of the locking means 913 of the electro-mechanical brake actuator 906.

The locking means 913 is configured for selectively locking the push rod 936 in the actuated position 950 (see Fig. 11b) by engaging the push rod 936 in a positive-fit.

The locking means 913 comprises a rotatable mounted locking device 916 and the push rod 936 comprises at least one recess 974 corresponding to the locking device 916. The locking device 916 is configured to engage the recess 974 in a locking position 918 (see Fig. 11b) in a positive-fit and to release the push rod 936 upon rotation into a released position 920 (see Fig. 11a).

The locking means 913 thus is able to engage the push rod 936 in its actuated position 940 to provide a park brake function.

The locking device 916 is coupled to an actuator (not shown) of the locking means 913 by a connector 976 for advancing rotation of the locking device 916. Preferably, the actuator is the electric motor 908 of the electro-mechanical brake actuator 906.

### List of reference signs (part of specification)

- 2: vehicle brake assembly
- 4: disc brake
- 6, 406, 506, 606, 706, 906: electro-mechanical brake actuator
- 8, 408, 508, 608, 708, 908: electric motor
- 10,410,510,610,710,910: gear
- 12, 412, 512, 612, 712, 912: motor shaft
- 13, 113, 213, 313, 413, 513, 613, 713, 813, 913: locking means
- 14, 114, 214, 314: locking actuator
- 16, 116, 216, 316, 616, 716, 816, 916: locking device, spring holder
- 20, 120, 720, 920: released position
- 22,122, 222, 322: locking device actuator
- 24, 124, 324: spring element
- 26, 126, 226, 326: linear actuator
- 28, 128, 228: brake drum
- 30, 130, 230: brake shoe
- 132, 232: adjuster
- 134: clearance
- 218, 318, 718, 818, 918: locking position
- 328: locking plate
- 330: wedge lock
- 436, 536, 636, 736, 836, 936: push rod
- 438, 538, 638, 738, 838, 938: push rod longitudinal axis
- 440, 540, 740, 940: retracted position
- 442, 542: self-locking worm gear
- 544: first gear stage
- 546 a,b: second gear stage
- 750, 950: actuated position
- 660, 760, 860: securing unit
- 661, 761: spring member
- 762, 862: mating part
- 763, 863: first securing element
- 764, 864: second securing element
- 765: retaining unit
- 766.1: first guiding slot
- 766.2: second guiding slot
- 767.1: first bearing
- 767.2: second bearing
- 768, 868: first abutment surface
- 769, 869: second abutment surface
- 770.1: first guiding pin
- 770.2: second guiding pin
- 871: engagement part
- 872: projection
- 873: actuation spring
- 974: recess
- 976: connector

## Claims

1. Electro-mechanical brake actuator (6, 406, 506, 606, 706, 906), in particular for a disc brake (4) of a commercial vehicle, the brake actuator (6, 406, 506, 606, 706, 906) comprising:
- an electric motor (8, 408, 508, 608, 708, 908) comprising a motor shaft (12, 412, 512, 612, 712, 912) for providing a driving torque,
- a push rod (436, 536, 636, 736, 836, 936) being movable along a push rod longitudinal axis (438, 538, 638, 738) between a retracted position (440, 540, 740, 940) and an actuated position (750, 950),
- a gear (10, 410, 510, 610, 710, 910) coupled to the electric motor (8, 408, 508, 608, 708, 908) and to the push rod (436, 536, 636, 736, 836, 936), wherein the gear (10, 410, 510, 610, 710, 910) is configured to transform the torque of the motor (8, 408, 508, 608, 708, 908) into a stroke of the push rod (436, 536, 636, 736, 836, 936),
**characterized by** a locking means (13, 113, 213, 313, 413, 513, 613, 713, 813, 913) configured for selectively locking the push rod (436, 536, 636, 736, 836, 936) in the actuated position (950).

2. The electro-mechanical brake actuator (6) according to claim 1,
wherein the locking means (13, 113, 213, 313) comprises a locking actuator (14, 114, 214, 314) configured for selectively locking the push rod (436) in the actuated position, the locking actuator (14, 114, 214, 314) comprising:
- a locking device (16, 116, 216, 316) that is configured to be moved between a locking position (218), in which the locking device (16, 116, 216, 316) blocks a movement of the push rod (436) and a released position (20, 120), in which the locking device (16, 116, 216, 316) releases the push rod (436), and
- a locking device actuator (22, 122, 222, 322) configured for actuating the locking device (16, 116, 216, 316) between the locking position (218) and the released position (20, 120).

3. The electro-mechanical brake actuator (6) according to claim 2, **characterized in that** the locking device actuator (22, 122, 222, 322) comprises a spring element (24, 124, 324), wherein the spring element (24, 124, 324) is configured for forcing the locking device (16, 116, 316) into the locking position (218).

4. The electro-mechanical brake actuator (6) according to any of claims 2-3, wherein the locking device actuator (22, 122, 222, 322) comprises a linear actuator (26, 126, 226, 326) that is configured to move the locking device (16, 116, 216, 316) against the force of the spring element (24, 124, 324) into the released position (20, 120).

5. The electro-mechanical brake actuator (6) according to any of claims 2-4, wherein the linear actuator (26, 126, 226, 326) comprises:
- an electric motor and a gearbox, and/or
- a solenoid.

6. The electro-mechanical brake actuator (6) according to any of claims 2-5, wherein the electro-mechanical brake actuator (6) comprises a brake drum (28, 128, 228) coupled to the electric motor (8),
and wherein the locking device (16, 126, 226) comprises a brake shoe (30, 130, 230) that is configured to be moved relative to the brake drum (28, 128, 228) between the locking position (218) at which the brake shoe (30, 130, 230) blocks a movement of the brake drum (28, 128, 228) and the released position (20, 120) at which a movement of the brake drum (28, 128, 228) is enabled.

7. The electro-mechanical brake actuator (6) according to claim 6,
wherein the brake shoe (130, 230) comprises an adjuster (132, 232) configured to adjust a clearance (134) between the brake drum (128, 228) and the brake shoe (130, 230).

8. The electro-mechanical brake actuator (6) according to any of claims 6 or 7,
wherein the brake shoe (130, 230) is arranged inside or outside of the brake drum (128, 228).

9. The electro-mechanical brake actuator (6) according to any of claims 6-8, wherein the brake drum (28, 128, 228) is coupled to the motor shaft (12) of the electric motor (8).

10. The electro-mechanical brake actuator (6) according to any of claims 2-5, wherein the locking device (316) comprises a wedge lock (330) that is configured to be moved between the locking position (318), in which the wedge lock (330) blocks a movement of the motor (8), and the released position at which a movement of the motor (8) is enabled.

11. The electro-mechanical brake actuator (6) according to claim 10, wherein the motor shaft (12) comprises a locking drum (328), and wherein the wedge lock (330) is configured to lock a movement of the locking drum (328).

12. The electro-mechanical brake actuator (6) according to claim 10, wherein the wedge lock (330) is configured to lock a movement of the motor shaft (12).

13. Electro-mechanical brake actuator (406, 506) according to claim 1, wherein the locking means (413, 513) comprise the gear (410, 510) being configured as a self-locking gear (442, 542).

14. The electro-mechanical brake actuator (406, 506) according to claim 13, wherein the self-locking gear (442, 542) is a self-locking worm gear (442, 542).

15. The electro-mechanical brake actuator (506) according to any of claims 13 or 14,
wherein the self-locking gear (542) is part of a first gear stage (544) and wherein the gear (542) further comprises a second gear stage (546 a,b).

16. The electro-mechanical brake actuator (606, 706, 806) according to claim 1,
wherein the locking means (613, 713, 813) comprise:
- a locking device (616, 716, 816) that is configured for linear movement in an axial direction (638, 738, 838) between a locking position (718, 818), in which the locking device (616, 716, 816) locks the push rod (636, 736, 836) in the actuated position and a released position (720), in which the locking device (616, 716, 816) releases the push rod (636, 736, 836),
- a spring member (661, 761) configured to apply a spring force on the locking device (616, 716, 816) towards the push rod (636, 736, 836) for moving the locking device (616, 716, 816) into the locking position (718, 818), and
- at least one securing unit (660, 760, 860) configured to reversible lock the locking device (616, 716) against the spring force in the released position (720) spaced apart from the push rod (636, 736, 836).

17. The electro-mechanical brake actuator (606, 706, 806) according to claim 16, wherein the locking device (616, 716) is a spring holder, and the spring member (661, 761) is at least partly received in the spring holder (616, 716).

18. The electro-mechanical brake actuator (606, 706, 806) according to claim 16 or 17,
wherein the push rod (636, 736, 836) is configured to advance the locking device (616, 716, 816) into the released position by moving against the spring force into the retracted position.

19. The electro-mechanical brake actuator (706, 806) according to claim 17 or 18,
wherein the securing unit (760, 860) is pivotingly mounted and configured to engage a mating part (762, 862) which is provided at the spring holder (716) by a pivoting movement in in case the push rod (736, 836) is in its retracted position.

20. The electro-mechanical brake actuator (706, 806) according to claim 19, wherein the securing unit (760, 860) comprises a first securing element (763, 863) and a second securing element (764, 864) each configured to pivot radially outwards to a deflected position for enabling linear movement of the locking device (716, 816) in the axial direction (638, 738) thereby temporary receiving the mating part (762, 862) in between, and configured to pivot radially inwards from the deflected position thereby engaging the mating part (762, 862) in case the mating part (762, 862) is received in between.

21. The electro-mechanical brake actuator (706, 806) according to claim 20, wherein the first securing element (763, 863) has a first abutment surface (768, 868) and is configured to pivot upon a force applied to the first abutment surface (768, 868), and the second securing element (764, 864) has a second abutment surface (769, 869) and is configured to pivot upon a force applied to the second abutment surface (769, 869),
wherein movement of the push rod (736, 836) into the retracted position preferably causes the mating part (762, 862) to apply a force on the first and second abutment surface (768, 868, 769, 869).

22. The electro-mechanical brake actuator (706) according to claim 20 or 21, further comprising:
a retaining unit (765) configured to engage the securing unit (760) and configured to prevent pivoting of the first securing element (763, 863) and the second securing element (764, 864) into the deflected position.

23. The electro-mechanical brake actuator (706) according claim 22, wherein the retaining unit (765) is a retaining plate pivotingly engaged with the securing unit (760) and has at least one guiding slot (766.1, 766.2),
wherein the securing unit (760) has at least one guiding pin (770.1, 770.2) guided in the guiding slot (766.1, 766.2) such that movement of the guiding pin (770.1, 770.2) causes pivoting movement of the retaining unit (765) in a first direction thereby pivoting the retaining unit (765) over its dead center.

24. The electro-mechanical brake actuator (706) according to claim 23, wherein the locking means (713) has an actuator coupled to the retaining unit (765) and being configured to pivot the retaining unit (765) in a reverse second direction for releasing the first securing element (763) and the second securing element (764).

25. The electro-mechanical brake actuator (806) according to claim 20 or 21, wherein the retaining unit (865) has a projection (872) provided by the securing unit (860) and an engagement portion (871) provided by the mating part (862) which corresponds to the projection (872), wherein the projection (872) is configured to engage the engagement portion (871) upon linear movement of the mating part (862) in the axial direction (838) towards the push rod, in case the mating part (862) is received between the first securing element ( 863) and the second securing element (864).

26. The electro-mechanical brake actuator (806) according claim 25, wherein the securing unit (860) further comprises at least a first actuation spring (873) advancing the securing unit (860) towards the deflected position for releasing the mating part (862).

27. The electro-mechanical brake actuator (806) according claim 25 or 26, wherein the projection (872) is configured to disengage the engagement portion (871) upon linear movement of the mating part (862) in the axial direction (838) towards the abutment surfaces (868, 869).

28. The electro-mechanical brake actuator (906) according claim 1,
wherein the locking means (913) is configured for selectively locking the push rod (936) in the actuated position (950) by engaging the push rod (936) in a positive-fit.

29. The electro-mechanical brake actuator (906) according claim 28, wherein the locking means (913) comprises a rotatable mounted locking device (916) and the push rod (936) comprises a least one recess (974) corresponding to the locking device (916), the locking device (916) being configured to engage the recess (974) in a locking position in a positive-fit and to release the push rod (936) upon rotation into a released position (918).

30. The electro-mechanical brake actuator (906) according claim 29, wherein the locking means (913) has an actuator coupled to the locking device (916) for advancing rotation of the locking device (916), preferably the actuator is the electric motor (908).

31. A locking means (13, 113, 213, 313, 413, 513, 613, 713, 813, 913) for an electro-mechanical brake actuator (6) of a commercial vehicle, in particular for a brake actuator of any one of the preceding claims, configured for selectively locking a push rod (436, 536, 636, 736, 836, 936) of the electro-mechanical brake actuator (6, 406, 506, 606, 706, 906) in an actuated position (750, 950).
